# FASCICULE DE BREVET EUROPEEN

(11) **EP 0 576 354 B1**
(45) Date de publication et mention de la délivrance du brevet: **13.12.1995**
(21) Numéro de dépôt: 93401610.6
(22) Date de dépôt: 23.06.1993
(51) Int. Cl.: F02K 3/075

(54) **Réacteur combiné en statoréacteur et turboréacteur**
Kombiniertes Turbo-Staustrahltriebwerk
Combined turbo-ram jet engine

(30) Priorité: 24.06.1992 FR 9207713
(43) Date de publication de la demande: 29.12.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Brossier, Pascal Noel, F-77127 Lieusaint (FR); Mazeaud, Georges, F-91330 Yerres (FR); Wurniesky, Pascal Claude, F-77176 Savigny Le Temple (FR)

(56) Documents cités:
- DE-B- 1 121 414
- FR-A- 1 306 025
- GB-A- 871 016
- US-A- 3 153 904

## Description

L'invention concerne un réacteur combiné en statoréacteur et en turboréacteur et consiste plus précisément en un moyen pour passer commodément de l'un à l'autre des deux modes de fonctionnement.

La propulsion à turboréacteur est couramment utilisée dans les avions en vol supersonique jusqu'à environ quatre fois la vitesse du son (Mach 4), mais on utilise le statoréacteur pour obtenir des vitesses encore plus élevées (Mach 7 ou Mach 8).

Comme l'air est à très haute température pendant l'utilisation du statoréacteur, il ne peut pas passer à travers la turbine du turboréacteur et doit donc contourner la veine où se trouve cette turbine en passant par des canaux de statoréacteur.

On ajoute souvent des canaux de décharge qui contournent la turbine et les brûleurs du statoréacteur et qui distraient une partie de l'air, qui ne se mêle de nouveau au reste de l'air qu'à la tuyère de sortie du réacteur afin d'améliorer la portance de l'écoulement et le rendement du réacteur. Ces canaux de décharge, utilisés en mode de turboréacteur exclusivement, compliquent le processus de transition d'un mode de fonctionnement à l'autre, et les systèmes à volets de l'art connu qui s'ouvrent ou se ferment à peu près simultanément pour instaurer le fonctionnement désiré ne donnent pas une entière satisfaction et sont souvent responsables d'une perte de poussée du réacteur aux commutations.

L'invention est relative à un réacteur comprenant en conséquence une veine de circulation de gaz divisée sur une section de sa longueur en une veine centrale de turboréacteur qui contient une turbine à gaz, des canaux périphériques de statoréacteur qui contiennent des brûleurs et des canaux périphériques de décharge qui se terminent en débouchant sur une section de la veine centrale en aval de la turbine ; des volets pour ouvrir et fermer la veine centrale ; et un anneau qui entoure la veine centrale et s'étend devant une section des canaux périphériques de décharge et de statoréacteur, l'anneau pouvant tourner sous l'action d'un dispositif moteur et étant muni d'évidements, les canaux étant disposés de façon que les évidements viennent successivement, pendant une rotation de l'anneau dans un sens uniforme, devant les canaux de décharge seulement.

On va maintenant décrire l'invention plus en détail à l'aide des figures suivantes annexées à titre non limitatif et qui décrivent une réalisation de l'invention :
- les figures 1 et 2 représentent les états d'un réacteur combiné respectivement en mode de turboréacteur et de statoréacteur ;
- les figures 3 à 5 sont des coupes transversales d'un réacteur qui illustrent les étapes de transition en montrant essentiellement les déplacements de l'anneau.

Le réacteur comprend un manche d'entrée d'air à l'amont de l'écoulement d'air qui délimite une veine sensiblement circulaire. Cette veine est ensuite divisée : une veine centrale 3 est traversée par les gaz en mode de turboréacteur et contient une turbine à gaz 5, et des canaux 2 et 2' de décharge et 4 et 4' de statoréacteur sont disposés autour de la veine centrale 3. Ces canaux sont au nombre de quatre. Ils ont chacun, devant un anneau 6 qui constitue l'objet principal de l'invention, une extension angulaire de 40° de circonférence environ chacun et sont groupés par paires, un canal de décharge 2 ou 2' étant adjacent à un canal de statoréacteur 4 ou 4' respectif.

Les canaux de statoréacteur 4 et 4' débouchent dans la veine centrale 3 en aval de la turbine à gaz 5. C'est là qu'on trouve les brûleurs 7. Quant aux canaux de décharge 2 et 2', ils rejoignent la veine centrale 3 à la tuyère 8 de sortie du réacteur.

L'anneau 6 comporte une couronne extérieure 9 dentée sur laquelle un pignon 10 animé par un moteur 11 engrène. Il s'étend, dans cette réalisation, sensiblement à mi-longueur des canaux de statoréacteur 4 et 4' et au tiers de la longueur des canaux de décharge 2 et 2'. Il roule sur la cloison cylindrique 12 qui sépare la veine centrale 3 des canaux par l'intermédiaire de rouleaux. La section de chaque canal est entourée d'un joint d'étanchéité circulaire qui frotte sur l'anneau 6 et empêche les fuites d'air entre les canaux. Ces moyens sont usuels dans la technique et n'ont donc pas été représentés.

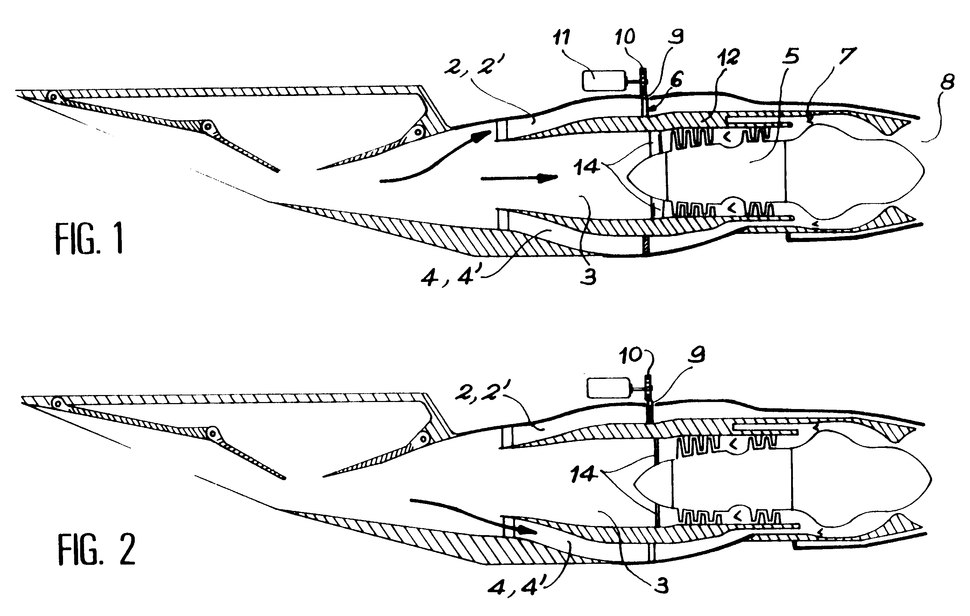

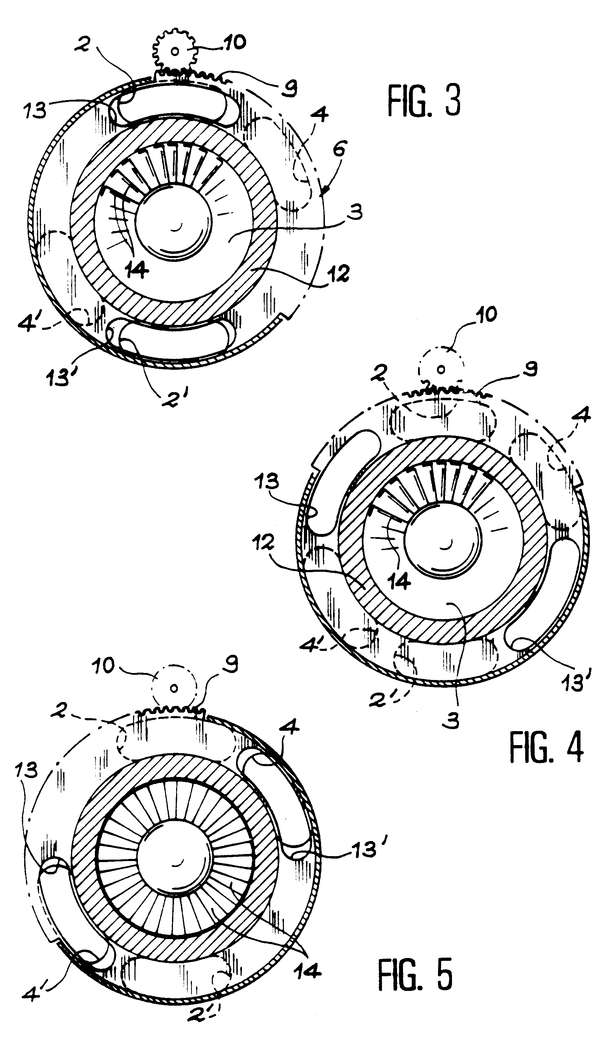

L'anneau 6 est pourvu de deux évidements 13 et 13' diamétralement opposés et qui s'étendent sur presque toute la largeur de l'anneau 6 et sur près d'un quart de tour de circonférence chacun. On s'apercevra que d'autres dispositions pourraient être trouvées sans difficulté si les canaux étaient disposés différemment, par exemple à des emplacements différents de circonférence ou à des diamètres différents. Dans l'état de la figure 3 qui correspond à celui de la figure 1, c'est-à-dire à un mode de fonctionnement en turboréacteur, l'air s'écoule librement à travers la veine centrale 3 et à travers les canaux de décharge 2 et 2', devant lesquels s'étend une partie des évidements 13 et 13'. Les canaux 4 et 4' sont par contre obstrués par les parties pleines de l'anneau 6.

La commutation consiste en une rotation continue de l'anneau 6 dans un sens uniforme et comporte tout d'abord une transition de fermeture des canaux de décharge 2 et 2' par les parties pleines de l'anneau 6 (figure 4), puis enfin une ouverture des canaux de statoréacteur 4 et 4' devant lesquels viennent respectivement une partie des évidements 13' et 13 (figure 5). Quand les canaux de statoréacteur 4 et 4' sont ouverts, on obstrue rapidement la veine centrale 3 grâce à la rotation de volets radiaux 14 situés à l'entrée de la turbine 5 et qui tournent sur des pivots non représentés pour former une paroi continue. De tels volets 14 et leur système de commande sont identiques à ceux des aubes de stator à calage variable (pivotantes) qui sont employées sur nombre de stators de compresseurs pour optimiser leur rendement à tous les régimes. La commande peut être effectuée par un interrupteur qu'une saillie de l'anneau 6 vient toucher dès que les canaux 4 et 4' sont ouverts ou par tout autre moyen d'asservissement. Il en résulte que les deux modes de fonctionnement coexistent, mais pendant une trop courte durée pour endommager les pièces du turboréacteur. La fermeture préliminaire des canaux de décharge 2 et 2' permet d'alimenter tout de suite les canaux de statoréacteur 4 et 4' au débit et à la pression convenable et d'éviter toute perte de poussée à la transition entre les deux modes de réaction, sans que le surcroît de pression que le turboréacteur subit momentanément puisse non plus l'endommager.

## Revendications

1. Réacteur comprenant une veine de circulation de gaz divisée sur une section de sa longueur en une veine centrale (3) de turboréacteur qui contient une tubine à gaz (5), des canaux périphériques de statoréacteur (4, 4') qui contiennent des brûleurs (7) et des canaux périphériques de décharge (2, 2') qui se terminent en débouchant sur une section de la veine de circulation de gaz en aval de la turbine ; des volets (14) pour ouvrir et fermer la veine centrale ; et caractérisé par un anneau (6) qui entoure la veine centrale et s'étend devant une section des canaux periphériques de décharge et de statoréacteur, l'anneau pouvant tourner sous l'action d'un dispositif moteur (11) et étant muni d'évidements (13, 13'), les canaux étant disposés de façon que les évidements viennent successivement, pendant une rotation de l'anneau dans un sens uniforme, devant les canaux de décharge seulement, puis devant aucun des canaux, puis devant les canaux de statoréacteur seulement.

2. Réacteur suivant la revendication 1, caractérisé en ce que l'anneau comprend une couronne dentée (9) sur laquelle un pignon (10) animé par le dispositif moteur engrène.

## Claims

1. A jet engine comprising a gas flow path divided over some of its length into a central flow path (3) for a turbojet engine comprising a gas turbine (5), peripheral ram jet channels (4, 4') in which burners (7) are disposed and peripheral discharge channels (2, 2') which extend into a part of the gas flow path downstream of the turbine, flaps (14) being provided to open and close the central flow path, characterised by a ring (6) which extends around the central path and is positioned before a part of the peripheral discharge and ram jet channels, the ring (6) being rotatable by a motor device (11) and being formed with apertures (13, 13'), the channels being so arranged that during rotation of the ring in a uniform direction the apertures move consecutively past just the discharge channels, then past none of the channels, then past just the ram jet channels.

2. A jet engine according to claim 1, characterised in that the ring has a toothed rim (9) meshing with a gear (10) driven by the motor device.

## Patentansprüche

1. Triebwerk mit einem Gaszirkulationsgang, der in einem Abschnitt seiner Länge in einen zentralen Turbotriebwerksgang (3) mit einer Gasturbine (5), in außen liegende Staustrahltriebwerkskanäle (4, 4') mit Brennern (7) sowie in außen liegende Auslaßkanäle (2, 2'), die an ihrem Ende in einen Abschnitt des Gaszirkulationsgangs hinter der Turbine münden, unterteilt ist; mit Klappen (14) zum Öffnen und Schließen des zentralen Gangs; und das durch einen Ring (6) gekennzeichnet ist, der den zentralen Gang umgibt und sich vor einem Abschnitt der außen liegenden Auslaß- und Staustrahltriebwerkskanäle erstreckt, wobei der Ring sich unter Einwirkung einer Antriebsvorrichtung (11) drehen kann und mit Aussparungen (13, 13') versehen ist, wobei die Kanäle dergestalt angeordnet sind, daß die Aussparungen während einer Umdrehung des Rings in einer gleichen Richtung nacheinander nur vor den Auslaßkanälen, dann vor keinem der Kanäle, dann nur vor den Staustrahltriebwerkskanälen liegen.

2. Triebwerk nach Anspruch 1,
dadurch gekennzeichnet,
daß der Ring einen Zahnkranz (9) aufweist, an dem ein von der Antriebsvorrichtung bewegtes Ritzel (10) eingreift.
